# EUROPÄISCHE PATENTANMELDUNG

(11) **EP 3 199 451 A1**
(43) Veröffentlichungstag der Anmeldung: **02.08.2017**
(21) Anmeldenummer: 17151939.0
(22) Anmeldetag: 18.01.2017
(51) Int. Cl.: B64C 11/14, F01D 25/06, F02C 7/04

(54) **NASENKONUS FÜR EINEN FAN EINES FLUGTRIEBWERKS**

(30) Priorität: 27.01.2016 DE 102016101428
(71) Anmelder: Rolls-Royce Deutschland Ltd & Co KG, 15827 Blankenfelde-Mahlow (DE)
(72) Erfinder: Klauke, Thomas, 03222 Lübbenau/Spreewald OT Groß-Beuchow (DE)
(74) Vertreter: Müller, Wolfram Hubertus

(57) **Zusammenfassung**

Die Erfindung betrifft einen Nasenkonus (2) für einen Fan (10) eines Flugtriebwerks (1), der ein Konusteil (21) aus faserverstärktem Kunststoff aufweist. Es ist vorgesehen, dass in das Konusteil (21) ein Elastomer (202, 252) integriert ist. Durch Integration eines Elastomers (202, 252) in das Konusteil (21) wird eine verbesserte mechanische Dämpfung einer Schwingungsanregung der Fan-Schaufeln (11) eines Flugtreibwerks (1) bereitgestellt. Die Erfindung betrifft des Weiteren einen Fan (10) und ein Flugtriebwerk (1) mit einem derartigen Nasenkonus (2).

## Beschreibung

Die Erfindung betrifft einen Nasenkonus für einen Fan eines Flugtriebwerks gemäß dem Oberbegriff des Anspruchs 1.

Es stellt ein bekanntes Problem dar, dass die Fan-Schaufeln eines Flugtriebwerks aufgrund einer Vielzahl unterschiedlicher Anströmbedingungen zum Schwingen angeregt werden können. Die Amplituden dieser unerwünschten Schwingungen der Fan-Schaufeln können sich erhöhen, wenn der Fan in integraler BLISK-Bauweise gefertigt ist (BLISK = "Blade Integrated Disk"), d. h. als ein Bauteil, das einstückig ausgebildet ist und sowohl die Fan-Schaufeln als auch die Fan-Scheibe umfasst, oder in integraler BLING-Bauweise (BLING = "Bladed Ring") ausgeführt ist, d.h. die Schaufeln integral mit dem tragenden Ring hergestellt sind. Dies hängt damit zusammen, dass in integraler Bauweise gefertigte Fans nicht mehr über gesonderte Schaufel-Scheiben-Verbindungen verfügen, welche zur mechanischen Dämpfung des Systems beitragen.

Aufgrund einer geringen mechanischen Dämpfung insbesondere von integralen Schaufel-Scheiben-Konstruktionen wird die maximale Schwingungsamplitude der Fan-Schaufeln fast ausschließlich von den aerodynamischen Randbedingungen bedingt. Insbesondere bei Betriebszuständen mit geringer oder sogar negativer aerodynamischer Dämpfung (Flutter) kann dies zu starken Spannungen und Deformationen führen, welche die Lebensdauer des Fans stark beeinträchtigen oder sogar Anrisse verursachen.

Typischerweise umfasst das Fan-Modul auch einen Nasenkonus, der stromaufwärts der Fan-Scheibe auf der Rotationsachse des Fans angeordnet ist und die Luftströmung in Richtung der Fan-Schaufeln umlenkt. Ein solcher Nasenkonus wird auch als Einlaufkonus, als Spinner oder als rotierender Zentralkörper bezeichnet. Es ist bekannt, einen Nasenkonus aus Faserverbundmaterial unter Verwendung von einzelnen Faserlagen, gewickelten Fasern oder Faserbündeln herzustellen. Solche Herstellungsverfahren sind beispielsweise aus der EP 1 832 733 B1, der DE 10 2010 005 986 A1 und der DE 10 2010 005 987 B4 bekannt.

Der vorliegenden Erfindung liegt die Aufgabe zu Grunde, Maßnahmen bereitzustellen, durch die die Dämpfungseigenschaften eines Fans, insbesondere eines Fans in BLISK- oder BLING-Bauweise verbessert werden, so dass der Fan weniger anfällig für Schwingungsanregungen ist.

Diese Aufgabe wird durch einen Nasenkonus mit den Merkmalen des Anspruchs 1, einen Fan mit den Merkmalen des Anspruchs 11 und ein Flugtriebwerk mit den Merkmalen des Anspruchs 13 gelöst. Ausgestaltungen der Erfindung sind in den Unteransprüchen angegeben.

Danach zeichnet sich die vorliegende Erfindung gemäß einem ersten Erfindungsaspekt dadurch aus, dass in ein Konusteil aus faserverstärktem Kunststoff eines Nasenkonus ein Elastomer integriert ist. Das Konusteil stellt dabei einen Bestandteil des Nasenkonus dar oder bildet den Nasenkonus vollständig. Weitere Bestandteile eines Nasenkonus können Strukturen zur Verbindung des Nasenkonus mit einer Fan-Scheibe sowie eine Gummispitze sein.

Durch Integration eines Elastomers in den Faserverbund des Konusteils kann die mechanische Dämpfung, die ein solches, mit einem Fan verbundenes Konusteil auf die Fanschaufeln auswirkt, im Vergleich zu einem reinen Faserverbundbauteil deutlich erhöht werden. Dies führt zu einer gewünschten Reduktion der Schwingungsamplituden der Fan-Schaufeln. Insbesondere führt die Anbindung des mit verbesserten dämpfenden Eigenschaften ausgebildeten Nasenkonus an die Fan-Scheibe zu einer erhöhten mechanischen Dämpfung desjenigen Bereichs der Fan-Scheibe, von der die Fan-Schaufeln abstehen und die dementsprechend in verstärktem Maße einer Schaufelschwingung ausgesetzt sind. Durch Dämpfung dieses Bereichs der Fan-Scheibe wird auch die Schwingung der Fan-Schaufeln gedämpft. Die bei der Dämpfung absorbierte Energie wird in dem Elastomer, welches in den Nasenkonus integriert ist, dissipiert.

Die vorliegende Erfindung ermöglicht darüber hinaus, die Wandstärke eines Nasenkonus verglichen mit der Wandstärke eines als reines Faserverbundbauteil ausgeführten Nasenkonus zu reduzieren, da die Widerstandsfähigkeit gegenüber Einschlägen und damit die Einschlagfestigkeit des Verbundes durch die Integration eines Elastomers erhöht wird. Durch die Reduzierung der Wandstärke des Nasenkonus können Herstellungsaufwand und Kosten reduziert werden.

Die vorliegende Erfindung ermöglicht somit eine reduzierte Amplitude einer Fan-Schaufel bei Schwingungsanregung. Damit einhergehen ein geringeres Schwingspannungsniveau und eine hieraus resultierende erhöhte Bauteillebensdauer. Zusätzlich kann eine geringere Masse des Nasenkonus bei gleicher Einschlagfestigkeit erreicht werden.

Gemäß einer Ausgestaltung der Erfindung weist das Konusteil mehrere Materiallagen auf, wobei mindestens eine der Materiallagen aus einem Elastomer besteht oder ein Elastomer aufweist. Dabei ist in einer Ausgestaltung vorgesehen, dass die Materiallagen im Wesentlichen parallel zueinander und zur Außenfläche des Konusteils verlaufen. Die einzelnen Materiallagen bilden dabei gebogene Ebenen, nämlich ebenfalls konische Flächen entsprechend der Form des Konusteils. Dabei kann vorgesehen sein, dass die Dicke der einzelnen Materiallagen zur Spitze des Konusteils abnimmt, um die Materialdicke insgesamt im Bereich der Spitze des Konusteils zu begrenzen.

Die mindestens eine Materiallage aus oder mit einem Elastomer stellt allerdings gemäß einer Ausgestaltung nicht die äußerste Materiallage des Konusteils dar. Die äußerste Materiallage des Konusteils besteht beispielsweise aus einem faserverstärkten Kunststoff, der eine steife Außenschale des Konusteils zur Verfügung stellt.

Es wird darauf hingewiesen, dass die Integration eines Elastomers in den faserverstärkten Kunststoff des Konusteils nicht zwingend dadurch erfolgt, dass eine oder mehrere Materiallagen durch das Elastomer gebildet werden oder dieses aufweisen. Abhängig von der Herstellungsart des Nasenkonus sind auch andere Arten der Integration eines Elastomers denkbar, zum Beispiel die Ausbildung des Elastomers in Form von kugelförmigen, zylinderförmigen oder quaderförmigen Inseln innerhalb des faserverstärkten Kunststoffs.

Eine Ausgestaltung der Erfindung sieht vor, dass das Elastomer als flächige Schicht mit einer Oberseite und einer Unterseite bereitgestellt ist, wobei an die Oberseite und/oder an die Unterseite eine Schicht aus faserverstärktem Kunststoff angrenzt. Der hierdurch bereitgestellte Schichtenverbund stellt drei Materiallagen des Nasenkonus bereit. Dabei kann in einer Ausführungsvariante vorgesehen sein, dass das Konusteil aus drei, auf diese Weise hergestellten Materiallagen besteht. In alternativen Ausführungsvarianten kann vorgesehen sein, dass das Konusteil weitere Materiallagen aufweist. Beispielsweise kann vorgesehen sein, dass zunächst ein oder mehrere Materiallagen aus Faserbündeln abgelegt oder gewickelt werden, anschließend der genannte Schichtenverbund auf die bereits bestehenden Materiallagen gelegt wird, und gegebenenfalls anschließend erneut ein oder mehrere Materiallagen aus Faserbündeln abgelegt oder gewickelt werden. Das Wickeln eines Nasenkonus unter Verwendung von Faserbündeln ist beispielsweise aus den Druckschriften EP 1 832 733 B1, DE 10 2010 005 986 A1 und DE 10 2010 005 987 B4 bekannt, auf die im Hinblick auf die Herstellung solcher Materiallagen ausdrücklich Bezug genommen wird.

Eine alternative Ausgestaltung der Erfindung sieht vor, dass das Elastomer die Ummantelung einer Trägerfaser bildet, die zur Herstellung mindestens einer Materiallage des Nasenkonus gewickelt wird. Das Elastomer wird dabei beispielsweise über ein Extrusionsverfahren als Ummantelung einer Trägerfaser bereitgestellt. Bei dieser Variante kann beispielsweise vorgesehen sein, dass zunächst ein oder mehrere Lagen aus Fasern oder Faserbündeln aus Kohlenstoff und/oder Aramid und/oder Glas entsprechend den Druckschriften EP 1 832 733 B1, DE 10 2010 005 986 A1 und DE 10 2010 005 987 B4 gewickelt werden, anschließend dieser Wickelprozess unterbrochen und eine Lage unter Verwendung einer mit einem Elastomer ummantelten Faser bzw. eines aus solchen Fasern gebildeten Faserbündels erfolgt, und anschließend wiederum ein oder mehrere Lagen aus Fasern oder Faserbündeln aus Kohlenstoff und/oder Aramid und/oder Glas gewickelt werden.

Wie bereits erwähnt, weist das Konusteil gemäß einer Ausgestaltung der Erfindung mindestens eine Materiallage auf, die durch faserverstärkten Kunststoff mit gewickelten Glasfaserbündeln und/oder Aramidfaserbündeln und/oder Kohlefaserbündeln gebildet ist. Bei dem erfindungsgemäß eingesetzten Elastomer handelt es sich beispielsweise um ein Gummi. Unter Gummi im Sinne der vorliegenden Erfindung wird jeder vulkanisierte Kautschuk, sowohl Naturkautschuk als auch synthetisierter Kautschuk verstanden. Gemäß einem anderen Ausführungsbeispiel handelt es sich bei dem Elastomer um ein viskoelastisches Material, das ein teilweise elastisches, teilweise viskoses Materialverhalten aufweist. Von Interesse sind insbesondere sogenannte Kelvin-Körper, die sich zeitabhängig wie eine Flüssigkeit, aber begrenzt und reversibel wie ein Festkörper verformen.

Weiter kann vorgesehen sein, dass das Elastomer derart ausgebildet ist, dass es sich im Verarbeitungsprozess des faserverstärkten Kunststoffs chemisch mit der Kunststoffmatrix des faserverstärkten Kunststoffs bzw. den jeweiligen Harzen verbindet. Beispielsweise vulkanisiert es bei Temperaturen zwischen 150 °C und 220 °C, also bei Temperaturen, bei denen typischerweise auch Matrixmaterialien faserverstärkter Kunststoffe aushärten.

Der faserverstärkte Kunststoff kann beispielsweise ein glasfaserverstärkter Kunststoff, ein aramidfaserverstärkter Kunststoff oder ein kohlenstofffaserverstärkter Kunststoff sein.

Der Nasenkonus kann in verschiedenen Ausführungsbeispielen konisch, elliptisch oder konisch/elliptisch ausgebildet sein. Ein Konus im Sinne der vorliegenden Erfindung umfasst somit auch elliptische und konisch/elliptische Formen. Bei einer rein konischen Form liegt ein Kegel mit geraden Außenwänden vor. Bei einer konisch/elliptischen Form ist der Nasenkonus angrenzend an die Spitze als Kegel mit geraden Außenwänden ausgestaltet und geht dann sukzessive in eine elliptische Form über.

Das Elastomer weist eine größere Elastizität bzw. ein kleineres Elastizitätsmodul als der faserverstärkte Kunststoff auf, der ansonsten das Konusteil bildet. Bevorzugt ist das Elastizitätsmodul des Elastomers um mindestens den Faktor 10, insbesondere um mindestens den Faktor 50, insbesondere um mindestens den Faktor 100, insbesondere um mindestens den Faktor 500, insbesondere um mindestens den Faktor 1000 kleiner als der Elastizitätsmodul des faserverstärkten Kunststoffs in Faserlängsrichtung.

Die vorliegende Erfindung betrifft in einem weiteren Erfindungsaspekt einen Fan eines Flugtriebwerks, der aufweist:
- eine Fan-Scheibe,
- eine Mehrzahl von Fan-Schaufeln, die mit der Fan-Scheibe verbunden sind, und
- einen Nasenkonus nach Anspruch 1, der stromaufwärts der Fan-Scheibe angeordnet und mit der Fan-Scheibe verbunden ist.

Dabei kann der Nasenkonus mit einem Bereich der Fan-Scheibe mechanisch verbunden sein, wobei der Nasenkonus mechanische Schwingungen dieses Bereichs der Fan-Scheibe und der damit verbundenen Fan-Schaufeln dämpft. Beispielsweise ist der Nasenkonus mit einer radial äußeren Verbindungsstruktur der Fan-Scheibe mechanisch verbunden.

Dabei ist gemäß einer Ausgestaltung vorgesehen, dass der Nasenkonus über eine Flanschverbindung mit der Fan-Scheibe verbunden ist.

Gemäß einer Ausgestaltung der Erfindung ist der Fan in BLISK-Bauweise ausgeführt (BLISK = "Blade Integrated Disk"), d. h. als ein Bauteil, das einstückig ausgebildet ist und sowohl die Fan-Schaufeln als auch die Fan-Scheibe umfasst. Es liegt eine integrale Schaufel-Scheibe-Bauweise vor. Durch diese Bauweise werden ansonsten erforderliche gesonderte Schaufel-Scheiben-Verbindungen eingespart. Des Weiteren kann der Fan grundsätzlich auch in BLING-Bauweise (BLING = "Bladed Ring") ausgeführt sein. Bei dieser Bauweise werden ähnlich wie bei der BLISK-Bauweise die Schaufeln integral mit einem tragenden Ring hergestellt. Grundsätzlich kann der Fan jedoch auch in herkömmlicher Weise unter Realisierung von Schaufel-Scheibe-Verbindungen hergestellt sein.

Die Erfindung betrifft in einem weiteren Erfindungsaspekt ein Flugtriebwerk mit einem Fan nach Anspruch 11. Bei dem Flugtriebwerk handelt es sich beispielsweise um ein Strahltriebwerk, beispielsweise ein Turbofan-Triebwerk.

Die vorliegende Erfindung betrifft in einem weiteren Erfindungsaspekt ein Flugtriebwerk, das aufweist:
- einen Fan, der aufweist: eine Fan-Scheibe; eine Mehrzahl von Fan-Schaufeln, die mit der Fan-Scheibe verbunden sind; und einen Nasenkonus, der mechanisch mit der Fan-Scheibe verbunden ist;
- wobei der Nasenkonus ein Konusteil bestehend aus mehreren Materiallagen aufweist,
- wobei zumindest die äußerste der Materiallagen aus faserverstärkten Kunststoff besteht, und
- wobei mindestens eine der Materiallagen aus einem Elastomer besteht oder ein Elastomer enthält.

Die mindestens eine Materiallage, die aus einem Elastomer besteht oder ein Elastomer enthält, ist in einem Ausführungsbeispiel durch eine flächige Elastomerschicht gebildet.

Die mindestens eine Materiallage, die aus einem Elastomer besteht oder ein Elastomer enthält, weist in einem anderen Ausführungsbeispiel eine mit einem Elastomer ummantelte Trägerfaser auf, die zur Herstellung dieser Materiallage gewickelt worden ist.

Die Erfindung wird nachfolgend unter Bezugnahme auf die Figuren der Zeichnung anhand mehrerer Ausführungsbeispiele näher erläutert. Es zeigen:
- Figur 1: eine vereinfachte schematische Schnittdarstellung eines als Zweistrom-Strahltriebwerk ausgebildeten Flugtriebwerks, das einen Fan und einen Nasenkonus umfasst;
- Figur 2: eine vereinfachte schematische Darstellung der Verbindung eines Fans mit einem Nasenkonus;
- Figur 3: eine teilweise geschnittene Ansicht eines Ausführungsbeispiels eines Nasenkonus;
- Figur 4: ein Ausführungsbeispiel eines Schichtenverbundes, der eine Elastomerschicht umfasst, wobei der Schichtenverbund zur Herstellung eines Nasenkonus eingesetzt wird;
- Figur 5: eine Draufsicht auf den Schichtenverbund der Figur 4, bevor dieser zur Bildung von Materiallagen des Nasenkonus gewickelt wird;
- Figur 6: eine Schnittansicht eines mit dem Schichtenverbund der Figur 4 hergestellten Nasenkonus;
- Figur 7: eine schematische Darstellung einer mit einem Elastomer umhüllten Trägerfaser, wobei die Trägerfaser zur Herstellung mindestens einer Lage eines Nasenkonus eingesetzt wird;
- Figur 8: eine grafische Darstellung der Dämpfungseigenschaften eines Nasenkonus mit integriertem Elastomer und eines Nasenkonus vollständig aus faserverstärktem Kunststoff; und
- Figur 9: eine grafische Darstellung des Kraftverlaufs beim Einschlagtest bei Verwendung eines Nasenkonus mit integriertem Elastomer und bei Verwendung eines Nasenkonus vollständig aus faserverstärktem Kunststoff.

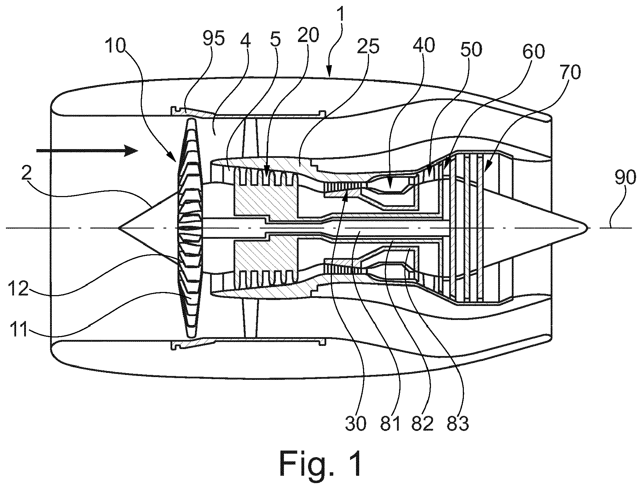

Die Figur 1 zeigt schematisch ein Zweistrom-Strahltriebwerk 1, das eine Fanstufe mit einem Fan 10 als Niederdruckverdichter, einen Mitteldruckverdichter 20, einen Hochdruckverdichter 30, eine Brennkammer 40, eine Hochdruckturbine 50, eine Mitteldruckturbine 60 und eine Niederdruckturbine 70 aufweist.

Der Mitteldruckverdichter 20 und der Hochdruckverdichter 30 weisen jeweils eine Mehrzahl von Verdichterstufen auf, die jeweils eine Rotorstufe und eine Statorstufe umfassen. Das Strahltriebwerk 1 der Figur 1 weist des Weiteren drei separate Wellen auf, eine Niederdruckwelle 81, die die Niederdruckturbine 70 mit dem Fan 10 verbindet, eine Mitteldruckwelle 82, die die Mitteldruckturbine 60 mit dem Mitteldruckverdichter 20 verbindet und eine Hochdruckwelle 83, die die Hochdruckturbine 50 mit dem Hochdruckverdichter 30 verbindet. Dies ist jedoch lediglich beispielhaft zu verstehen. Wenn das Strahltriebwerk beispielsweise keinen Mitteldruckverdichter und keine Mitteldruckturbine besitzt, wären nur eine Niederdruckwelle und eine Hochdruckwelle vorhanden.

Der Fan 10 weist eine Mehrzahl von Fan-Schaufeln 11 auf, die mit einer Fan-Scheibe 12 verbunden sind. Der Annulus der Fan-Scheibe 12 bildet dabei die radial innere Begrenzung des Strömungspfads durch den Fan 10. Radial außen wird der Strömungspfad durch ein Fangehäuse 95 begrenzt. Stromaufwärts der Fan-Scheibe 12 ist ein Nasenkonus 2 angeordnet.

Hinter dem Fan 10 bildet das Strahltriebwerk 1 einen Sekundärstromkanal 4 und einen Primärstromkanal 5 aus. Der Primärstromkanal 5 führt durch das Kerntriebwerk, das den Mitteldruckverdichter 20, den Hochdruckverdichter 30, die Brennkammer 40, die Hochdruckturbine 50, die Mitteldruckturbine 60 und die Niederdruckturbine 70 umfasst. Dabei sind der Mitteldruckverdichter 20 und der Hochdruckverdichter 30 von einem Umfangsgehäuse 25 umgeben, dass innenseitig eine Ringraumfläche bildet, die den Primärstromkanal 5 radial außen begrenzt. Radial innen ist der Primärstromkanal 5 durch entsprechende Kranzoberflächen der Rotoren und Statoren der jeweiligen Verdichterstufen bzw. durch die Nabe oder mit der Nabe verbundene Elemente der entsprechenden Antriebswelle begrenzt.

Die beschriebenen Komponenten besitzen eine gemeinsame Symmetrieachse 90. Die Symmetrieachse 90 definiert eine axiale Richtung des Flugtriebwerks. Eine radiale Richtung des Flugtriebwerks verläuft senkrecht zur axialen Richtung.

Im Kontext der vorliegenden Erfindung sind der Fan 10 und der Nasenkonus 2 von besonderer Bedeutung, wie nachfolgend erläutert werden wird.

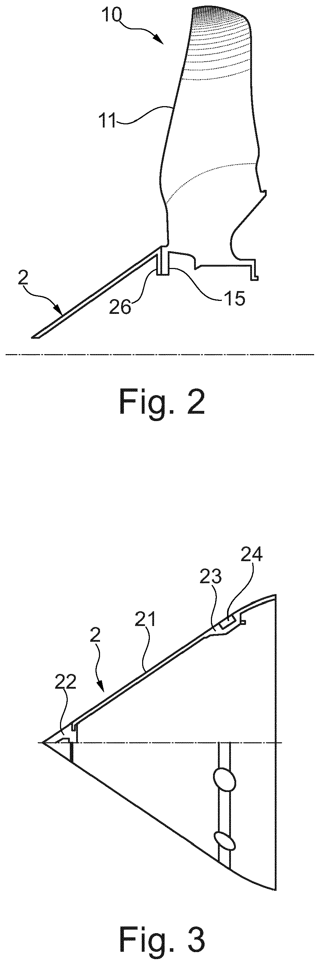

Die Figur 2 zeigt beispielhaft eine Fan-Schaufel 11 eines Fans 10. Der Fan 10 weist Verbindungsmittel 15 auf, die der Befestigung eines Nasenkonus 2 am Fan 10 dienen. Die Verbindungsmittel 15 sind in der Figur 2 schematisch dargestellt und beispielsweise durch einen Flansch realisiert, der die Fan-Scheibe oder ein mit der Fan-Scheibe verbundenes Teil ausbildet. Der Nasenkonus 2 weist Verbindungsmittel 26 auf, die eine feste mechanische Verbindung des Nasenkonus 2 mit dem Fan 10 ermöglichen. Gemäß der beispielhaften Darstellung der Figur 2 kann es sich dabei um einen Flansch handeln, der zusammen mit dem Flansch 15 des Fans 10 eine Flanschverbindung bereitstellt. Es wird darauf hingewiesen, dass die Verbindung des Nasenkonus 2 mit dem Fan 10 grundsätzlich auch in anderer Weise erfolgen kann, auch unter Verwendung von Zwischenteilen, die mit dem Nasenkonus 2 und/oder dem Fan 10 verbunden sind.

Die Figur 3 zeigt in teilweiser Draufsicht und den teilweise geschnittener Ansicht ein Ausführungsbeispiel eines Nasenkonus 2. Der Nasenkonus 2 umfasst ein Konusteil 21, eine Konusspitze 22, eine Materialverstärkung 23 und im Bereich der Materialverstärkung 23 ausgebildete Öffnungen 24 jeweils zur Aufnahme und Durchführung einer nicht dargestellten Schraube.

Das Konusteil 21 besteht aus einer Mehrzahl von Materiallagen, die noch erläutert werden, wobei mindestens eine der Materiallagen ein Elastomer aufweist oder vollständig aus einem solchen besteht. Die optionale Konusspitze 22 besteht üblicher Weise aus Gummi und dient dazu, einer Vereisung des Nasenkonus 2 entgegenzuwirken. Sofern der Nasenkonus 2 keine gesonderte Konusspitze 2 aufweist, bildet das Konusteil 21 ebenfalls die Konusspitze. Die Materialverstärkung 23 und die Öffnungen 24 dienen der Verbindung des Nasenkonus 2 mit dem Fan, wobei beispielsweise in die Öffnungen 24 eingeführte Schrauben an einem Flansch des Fans verschraubt werden.

Der Nasenkonus 2 der Figur 3 weist im Wesentlichen eine konische Form auf, d.h. er wird durch einen Kegel mit sich geradlinig erstreckender Außenwand gebildet. Lediglich an seinem dem Fan zugewandten Ende ist der Nasenkonus 2 etwas abgeflacht. Diese Form des Nasenkonus 2 ist jedoch nur beispielhaft zu verstehen. Der Nasenkonus 2 kann alternativ auch elliptisch oder konisch/elliptisch ausgebildet sein.

Wie bereits erwähnt, besteht das Konusteil 21 aus einer Mehrzahl von Materiallagen. Die Materiallagen verlaufen dabei gemäß einer Ausführungsvariante im Wesentlichen parallel zur äußeren Oberfläche des Konusteils 21, d.h. ein Schnitt senkrecht zur Oberfläche schneidet durch sämtliche Materiallagen.

Zumindest die äußerste Materiallage des Konusteils 21, die die Außenhaut des Konusteils 21 bildet, besteht dabei aus einem faserverstärkten Kunststoff, beispielsweise aus einem glasfaserverstärktem Kunststoff, aus aramidfaserverstärktem Kunststoff oder aus einem kohlenstofffaserverstärktem Kunststoff. Die Herstellung einer solchen Materiallage aus faserverstärktem Kunststoff kann in an sich bekannter Weise erfolgen, zum Beispiel durch Auflegen von Einzellagen, durch Wickeln einer Faser oder eines Faserbündels, wobei die Fasern oder Faserbündel entweder bereits beim Wickeln in ein Harz eingebettet sind oder nach dem Wickeln mit einem Harz getränkt werden. Derartige Wickelverfahren sind beispielsweise in den Druckschriften EP 1 832 733 B1, DE 10 2010 005 986 A1 und DE 10 2010 005 987 B4 beschrieben.

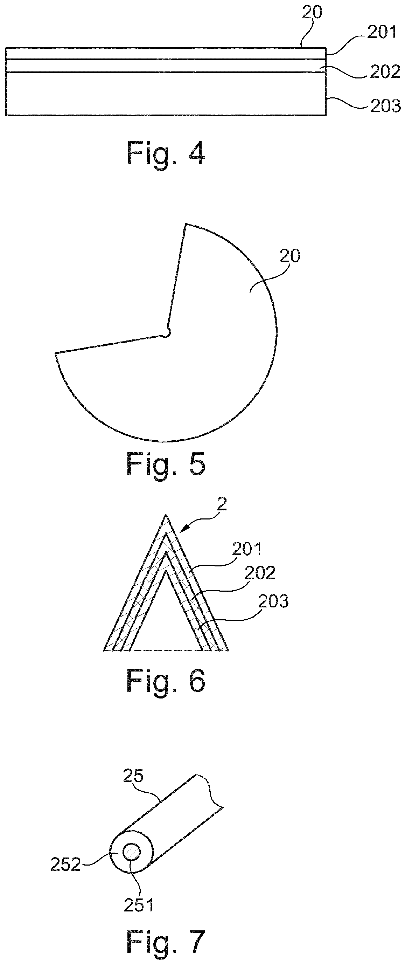

Das Konusteil 21 weist des Weiteren mindestens eine Materiallage auf, die aus einem Elastomer besteht. Ein Ausführungsbeispiel hierfür zeigt die Figur 4. Die Figur 4 zeigt in Schnittansicht einen Schichtenverbund 20, der drei Schichten bzw. Materiallagen 201, 202 und 203 aufweist. Die Schichten 201 und 203 bestehen aus einem faserverstärkten Kunststoff. Die Schicht 202 dagegen besteht aus einem Elastomer. Beispielsweise wird die Schicht 202 durch ein Gummi oder ein viskoelastisches Material bereitgestellt. Das Elastomers ist dabei derart gewählt, dass es zusammen mit dem faserverstärkten Kunststoff der Materiallagen 201, 203 bei einer Temperatur von beispielsweise 150 °C bis 220 °C vulkanisiert. Dies erlaubt in einfacher Weise eine integrale gemeinsame Herstellung sämtlicher Materiallagen 201, 202, 203 des Schichtenverbunds 20.

Die Figur 5 zeigt den Schichtenverbund 20 der Figur 4 in einer Draufsicht. Der Schichtenverbund 20 ist im dargestellten Ausführungsbeispiel als Kreissektor ausgebildet und dafür vorgesehen und geeignet, auf einen Wickelkern gewickelt zu werden, wobei sich die gewünschte Kegelform ergibt. Statt auf einen Wickelkern kann der Schichtenverbund 20 gemäß einem alternativen Ausführungsbeispiel auch auf eine zuvor hergestellte Materiallage aus faserverstärktem Kunststoff gelegt werden.

Die Figur 6 zeigt eine Schnittansicht eines Nasenkonus 2, der durch den Schichtenverbund 20 der Figuren 4 und 5 hergestellt worden ist. Bei dem Ausführungsbeispiel der Figuren 4-6 weist der Nasenkonus 2 keine gesonderte Gummispitze auf und besteht allein aus einem Konusteil. Alternativ könnte eine gesonderte Gummispitze vorhanden sein, für welchen Fall der Schichtenverbund 20 im Bereich der Spitze entsprechend angepasst ist.

Wie der Schnittansicht der Figur 6 entnommen werden kann, weist der Nasenkonus 2 drei Materiallagen 201, 202, 203 auf, wobei sich die Elastomerschicht 202 zwischen den Schichten 201 und 203 aus faserverstärkten Kunststoff befindet. Innen angrenzend an die innere Materiallage 203 ist der Nasenkonus 2 hohl, d.h. es handelt sich bei dem Nasenkonus 2 um ein konusförmiges Hohlelement. Dies gilt für sämtliche Ausführungsbeispiele der Erfindung.

In alternativen Ausführungsbeispielen weist der Nasenkonus 2 eine andere Anzahl von Materiallagen auf, beispielsweise 2, 4, 5 oder 6 Materiallagen. Im Falle von lediglich zwei Materiallagen bildet die Materiallage aus faserverstärkten Kunststoff die äußere Lage und die aus Elastomer bestehende Lage die innere Lage. Bei mehr als drei Materiallagen kann vorgesehen sein, dass zusätzlich zu dem Schichtenverbund gemäß den Figuren 4 und 5 Materiallagen aus faserverstärkten Kunststoff realisiert sind, beispielsweise der Schichtenverbund 20 gemäß den Figuren 4 und 5 auf eine zuvor gefertigte Materiallage aus faserverstärkten Kunststoff gewickelt wird.

Auch kann in alternativen Ausführungsbeispielen vorgesehen sein, dass zwei Schichtenverbunde 20 gemäß den Figuren 4 und 5 aufeinander gelegt werden, wobei sich insgesamt sechs Schichten ergeben, von denen zwei Schichten Elastomerschichten sind. Diese Alternativen verdeutlichen den beispielhaften Charakter des Ausführungsbeispiels der Figuren 4-6.

Die Figur 7 zeigt ein Ausführungsbeispiel, bei der ein Elastomer nicht in Form einer homogenen Schicht, wie der Schicht 202 der Figur 4, im Nasenkonus 2 bereitgestellt wird, sondern durch eine Faser 25, bei der eine Trägerfaser 251 mit einem Elastomer 252 ummantelt ist. Bei der Trägerfaser 251 handelt es sich beispielsweise um eine Kohlenstofffaser oder eine Aramidfaser oder um eine Glasfaser. Jedoch können auch andere Fasern Einsatz finden. Das Ummanteln der Trägerfaser 251 mit einem Elastomer 252 erfolgt beispielsweise unter Verwendung eines Extrusionsprozesses, wobei die Faser 251 durch eine Düse geführt und dabei mit dem Elastomer 252 ummantelt. Bei dem Elastomer handelt sich beispielsweise um ein Gummi oder um ein viskoelastisches Elastomer.

Ein aus mehreren Schichten bestehender Nasenkonus 2 bzw. dessen Konusteil 21 (vgl. Figur 3) wird beispielsweise derart unter Verwendung der ummantelten Trägerfaser 251 der Figur 7 hergestellt, dass zunächst ein oder mehrere Materialschichten aus faserverstärktem Kunststoff gewickelt werden, beispielsweise entsprechend einem Wicklungsverfahren, wie es in den Druckschriften EP 1 832 733 B1, DE 10 2010 005 986 A1 und DE 10 2010 005 987 B4 beschrieben ist. Anschließend wird auf die vorhandene Materiallage eine Materiallage gewickelt, deren Fasern 25 entsprechend der Figur 7 mit Elastomer 252 ummantelt sind, wobei die Fasern 25 zu Faserbündeln zusammengefügt sein können. Nach Wickeln dieser Lage können ein oder mehrere weitere Lagen aus faserverstärktem Kunststoff auf die mit der gummierten Faser 25 gewickelte Lage gewickelt werden. Die gewickelten Fasern sind oder werden dabei in einem Harz getränkt, wobei ein Aushärten bzw. Vulkanisieren sämtlicher Lagen gemäß einer Ausführungsvariante gleichzeitig erfolgt. Dies ist jedoch nicht zwingend. Alternativ können die einzelnen Lagen jeweils gesondert ausgehärtet werden, wobei auf eine ausgehärtete Lage dann eine weitere Lage gewickelt wird.

In weiteren Ausführungsbeispielen werden nicht Fasern oder Faserbündel gewickelt, sondern flächig angeordnete Faserverbände, beispielsweise in Form von Streifen angeordnete Faserverbände abgelegt. Grundsätzlich ergeben sich dabei keine Unterschiede bei der Herstellung eines Nasenkonus 2.

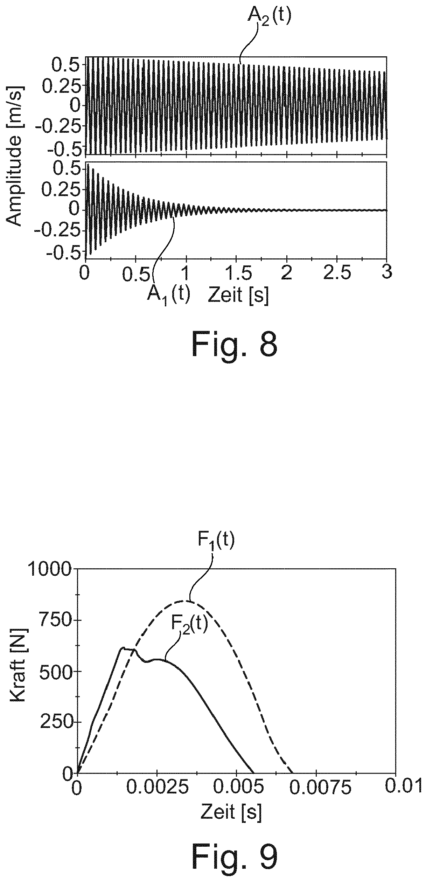

Die Figur 8 illustriert mit der vorliegenden Erfindung verbundenen Vorteile im Hinblick auf das Schwingungsverhalten einer Fan-Schaufel eines Fans. Die Figur 8 zeigt einen Schwingungsverlauf A₁(t) eines Nasenkonus bei Verwendung eines erfindungsgemäßen Schichtaufbaus und einen Schwingungsverlauf A₂(t) bei Verwendung eines herkömmlichen Nasenkonus. Dargestellt ist das Abklingen der Schwingung des Nasenkonus nach einer Anregung. Es ist deutlich erkennbar, dass der Schwingungsverlauf A₁(t) gegenüber dem Schwingungsverlauf A₂(t) deutlich gedämpft ist, d.h. die Schwingung des Nasenkonus und des damit verbundenen Fans (z.B. eine Fan-BLISK oder eine Fan-BLING) in erhöhtem Maße gedämpft erfolgt. Der Mechanismus ist dabei derart, dass der dämpfende Nasenkonus Schwingungen absorbiert, die über die Verbindung zwischen Fan-Scheibe und Nasenkonus auf den Nasenkonus übertragen werden. Der entsprechende Bereich der Fanscheibe wird dabei gedämpft, was wiederum zu einer Dämpfung der Schwingungen der Fan-Schaufeln führt. Insbesondere erfolgt die Verbindung der Fan-Scheibe mit dem Nasenkonus im radial äußeren Bereich der Fanscheibe, nämlich am oder angrenzend an den Annulus der Fan-Scheibe, von dem die Fan-Schaufeln abstehen. Durch Dämpfung der Schwingungen im Bereich des Annulus der Fan-Scheibe werden auch die Schaufelschwingungen gedämpft. Dies gilt in besonderem Maße bei Ausbildung des Fans in BLISK- Bauweise oder BLING- Bauweise.

Die Figur 9 illustriert die mit der vorliegenden Erfindung verbundenen Vorteile im Hinblick auf die Einschlagfestigkeit des Nasenkonus. Die Figur 9 zeigt den Kraftverlauf bei einem Einschlag F₁(t) bei Verwendung eines erfindungsgemäßen Nasenkonus und das Einschlagverhalten F₂(t) bei Verwendung eines herkömmlichen Nasenkonus. Bei Verwendung eines erfindungsgemäßen Nasenkonus können stärkere Kräfte absorbiert werden, wobei die aufgenommenen Kräfte über einen längeren Zeitraum durch das Dämpfungsmaterial absorbiert werden. Dementsprechend wird die Einschlagfestigkeit des Verbundes durch die Integration eines Elastomers erhöht, was es erlaubt, bei gleichbleibender Einschlagfestigkeit die Materialdicke des Nasenkonus zu reduzieren.

Die Erfindung beschränkt sich in ihrer Ausgestaltung nicht auf die vorstehend dargestellten Ausführungsbeispiele, die lediglich beispielhaft zu verstehen sind. Beispielsweise stellen die genannten Elastomere, die dargestellte Anzahl von Materiallagen und deren Anordnung, die Form des Nasenkonus und die Art dessen Verbindung mit dem Fan lediglich beispielhafte Implementierungen der Erfindung dar.

Des Weiteren wird darauf hingewiesen, dass die Merkmale der einzelnen beschriebenen Ausführungsbeispiele der Erfindung in verschiedenen Kombinationen miteinander kombiniert werden können. Sofern Bereiche definiert sind, so umfassen diese sämtliche Werte innerhalb dieser Bereiche sowie sämtliche Teilbereiche, die in einen Bereich fallen.

## Patentansprüche

1. Nasenkonus (2) für einen Fan (10) eines Flugtriebwerks (1), der ein Konusteil (21) aus faserverstärktem Kunststoff aufweist,
**gekennzeichnet durch**
ein Elastomer (202, 252), das in das Konusteil (21) integriert ist.

2. Nasenkonus nach Anspruch 1, **dadurch gekennzeichnet, dass** das Konusteil (21) mehrere Materiallagen (201-203) aufweist und mindestens eine der Materiallagen (202), nicht jedoch die äußerste Materiallage, aus einem Elastomer besteht oder ein Elastomer aufweist.

3. Nasenkonus nach Anspruch 2, **dadurch gekennzeichnet, dass** die Materiallagen (201-203) im Wesentlichen parallel zueinander und zur Außenfläche des Konusteils (21) verlaufen.

4. Nasenkonus nach Anspruch 2 oder 3, **dadurch gekennzeichnet, dass** das Elastomer (202) als flächige Schicht mit einer Oberseite und einer Unterseite bereitgestellt ist, wobei an die Oberseite und/oder an die Unterseite eine Schicht aus faserverstärktem Kunststoff (201, 203) angrenzt, und wobei dieser Schichtenverbund (20) Materiallagen des Konusteils (21) bildet.

5. Nasenkonus nach einem der vorangehenden Ansprüche, **dadurch gekennzeichnet, dass** das Elastomer (252) die Ummantelung einer Trägerfaser (251) bildet, die zur Herstellung des Konusteils (21) verwendet worden ist.

6. Nasenkonus nach einem der Ansprüche 2 bis 5, **dadurch gekennzeichnet, dass** das Konusteil (21) mindestens eine Materiallage (201, 203) aufweist, die durch faserverstärkten Kunststoff mit gewickelten Glasfaserbündeln und/oder Kohlefaserbündeln und/oder Aramidfaserbündeln gebildet ist.

7. Nasenkonus nach einem der vorangehenden Ansprüche, **dadurch gekennzeichnet, dass** das Elastomer (202, 252) ein Gummi ist.

8. Nasenkonus nach einem der vorangehenden Ansprüche, **dadurch gekennzeichnet, dass** das Elastomer (202, 252) ein viskoelastisches Material ist.

9. Nasenkonus nach einem der vorangehenden Ansprüche, **dadurch gekennzeichnet, dass** das Elastomer (202, 252) derart ausgebildet ist, dass es sich im Aushärtungsprozess des faserverstärkten Kunststoffs mit der Kunststoffmatrix des faserverstärkten Kunststoffs verbindet.

10. Nasenkonus nach einem der vorangehenden Ansprüche, **dadurch gekennzeichnet, dass** das Elastomer (202, 252) einen Elastizitätsmodul aufweist, der um mindestens den Faktor 10, insbesondere um mindestens den Faktor 50, insbesondere um mindestens den Faktor 100, insbesondere um mindestens den Faktor 500, insbesondere um mindestens den Faktor 1000 kleiner ist als der Elastizitätsmodul des faserverstärkten Kunststoffs in Faserlängsrichtung.

11. Fan (10) eines Flugtriebwerks (1), der aufweist:
- eine Fan-Scheibe (12),
- eine Mehrzahl von Fan-Schaufeln (11), die mit der Fan-Scheibe (12) verbunden sind, und
- einen Nasenkonus (2) nach Anspruch 1, der stromaufwärts der Fan-Scheibe (12) angeordnet und mit der Fan-Scheibe (12) verbunden ist.

12. Fan nach Anspruch 11, **dadurch gekennzeichnet, dass** der Fan (10) in BLISK-Bauweise oder in BLING-Bauweise ausgeführt ist.

13. Flugtriebwerk (1), das aufweist:
- einen Fan (10), der aufweist:
o eine Fan-Scheibe (12),
o eine Mehrzahl von Fan-Schaufeln (11), die mit der Fan-Scheibe (12) verbunden sind, und
o einen Nasenkonus (2), der mechanisch mit der Fan-Scheibe (10) verbunden ist,
- wobei der Nasenkonus (2) ein Konusteil (21) bestehend aus mehreren Materiallagen (201-203) aufweist,
- wobei zumindest die äußerste der Materiallagen (201) aus faserverstärkten Kunststoff besteht, und
- wobei mindestens eine der Materiallagen (202) aus einem Elastomer besteht oder ein Elastomer enthält.

14. Flugtriebwerk nach Anspruch 13, **dadurch gekennzeichnet, dass** die mindestens eine Materiallage (202), die aus einem Elastomer besteht oder ein Elastomer enthält, durch eine flächige Elastomerschicht gebildet ist.

15. Flugtriebwerk nach Anspruch 13, **dadurch gekennzeichnet, dass** die mindestens eine Materiallage, die aus einem Elastomer besteht oder ein Elastomer enthält, eine mit einem Elastomer (252) ummantelte Trägerfaser (251) aufweist, die zur Herstellung dieser Materiallage gewickelt worden ist.
